# EUROPEAN PATENT APPLICATION

(11) **EP 0 890 829 A1**
(43) Date of publication of application: **13.01.1999**
(21) Application number: 97111485.5
(22) Date of filing: 07.07.1997
(51) Int. Cl.: G01K 1/00, G01K 1/08

(54) **Hygienic protecting means for electronic thermometer**

(71) Applicant: Uebe GmbH, 97877 Wertheim (DE)
(72) Inventor: Chang, David, 3F, No. 6, Lane 153, Taipei (TW)
(74) Representative: Schubert, Siegmar, Dipl.-Ing.

(57) **Abstract**

A hygienic protecting device for an electronic thermometer includes: a disposable wrapping film wrapped on a front housing portion of an infrared thermometer, a fastening cup member made as truncated cone shape and disposed about the disposable film on the front housing portion of the thermometer having a probe mounted within the front housing portion for fastening the disposable film on the front housing portion for preventing contamination when inserting the front housing portion and the probe into a person's ear canal, and a dust-proof thin film wrapped on the probe for shielding the probe for preventing contamination in the probe with a fastening ring fastening the dust-proof thin film on the probe and a circular contacting ring disposed about the dust-proof thin film and retained between the dust-proof thin film on the probe and an inside wall in the front housing portion for forming an air space annularly defined between the probe and the front housing portion for minimizing the thermal transfer between the housing portion and the probe for preventing the influence by ambient temperature for ensuring a reliable temperature measurement in the ear canal of the person to be measured for a reliable and precise measurement of a body temperature.

## Description

### Background of the Invention:

U.S. Patent Numbers 4,895,164; 4,911,559 (RE. 34,599); 5,018,872; and 5,411,032 all disclosed a disposable probe cover for use in covering and protecting the probe of a medical infrared thermometer. However, the disposal of the probe cover may waste money and cause problem of waste disposal. In a family use, the electronic thermometer may be repeatedly used by the same people in the family. If after each time of temperature measurement, the protective probe cover would be disposed and replaced with a complete new cover, increasing family expense and causing waste disposal problem.

Meanwhile, once the protective probe cover is removed from the conventional thermometers, and before the probe is re-covered by the probe cover, the radiation guide tube of the probe will be exposed to environmental dust pollution, causing contamination to the probe and possibly influencing the measurement precision of the thermometer.

The present inventor has found the drawbacks of the conventional probe assembly of electronic thermometer, and invented the hygienic protecting device for the electronic thermometer.

### Summary of the Invention:

The object of the present invention is to provide a hygienic protecting device for an electronic thermometer including: a disposable wrapping film wrapped on a front housing portion of an infrared thermometer, a fastening cup member made as truncated cone shape and disposed about the disposable film on the front housing portion of the thermometer having a probe mounted within the front housing portion for fastening the disposable film on the front housing portion for preventing contamination when inserting the front housing portion and the probe into a person's ear canal, and a dust-proof thin film wrapped on the probe for shielding a radiation guiding hole in the probe for preventing contamination in the probe with a fastening ring fastening the dust-proof thin film on the probe and a circular contacting ring disposed about the dust-proof thin film and retained between the dust-proof thin film on the probe and an inside wall in the front housing portion for forming an air space annularly defined between the probe and the front housing portion for minimizing the thermal transfer between the housing portion and the probe for preventing the influence by ambient temperature for ensuring a reliable temperature measurement in the ear canal of the person to be measured for a reliable and precise measurement of a body temperature.

### Brief Description of the Drawings:

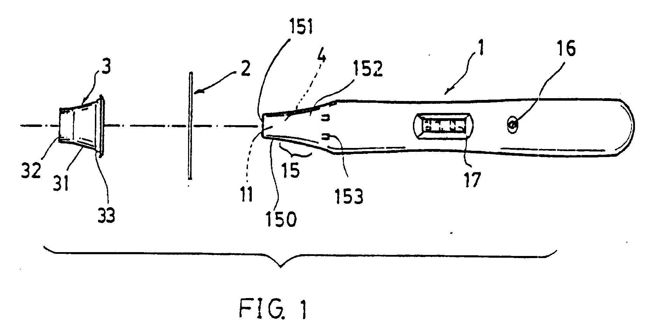

Figure 1 is an illustration showing the elements in construction of the present invention.

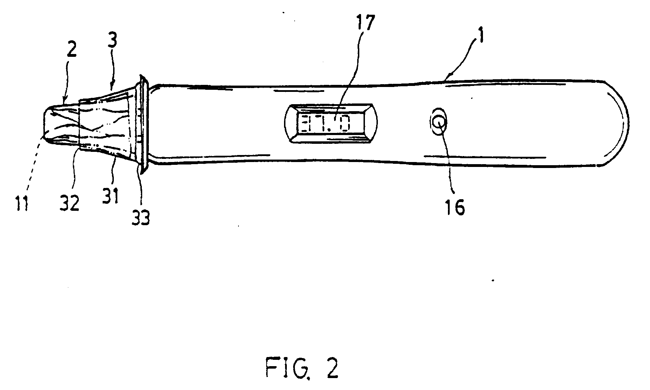

Figure 2 is an illustration of the present invention when assembled.
Figure 3 is a partial sectional drawing of the present invention.

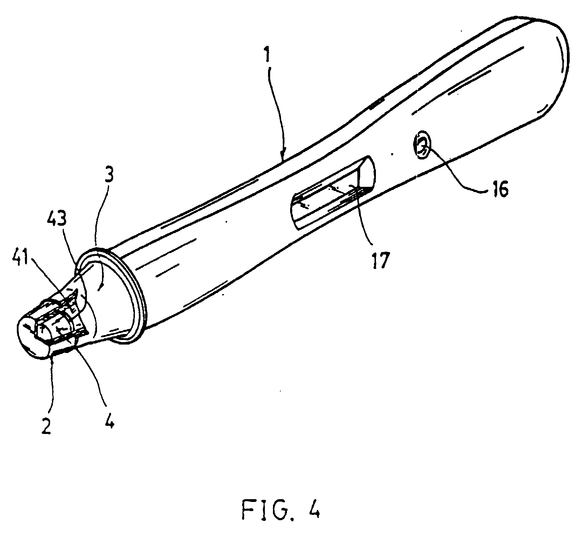

Figure 4 is a partial cut-away perspective illustration of the present invention.

### Detailed Description:

As shown in the drawing figures, a preferred embodiment of the present invention comprises; an infrared thermometer 1 having a probe 11 formed in a front housing portion 15 of the thermometer 1, a disposable wrapping film 2 wrapped on the front housing portion 15 for protecting the probe 11 and the front housing portion 15, a fastening cup member 3 disposed around the disposable wrapping film 2 for fastening the wrapping film 2 on the front housing portion 15 of the thermometer 1, and a dust-proof means 4 wrapped on the probe 11 for preventing dust contamination into the probe 11 of the thermometer 1.

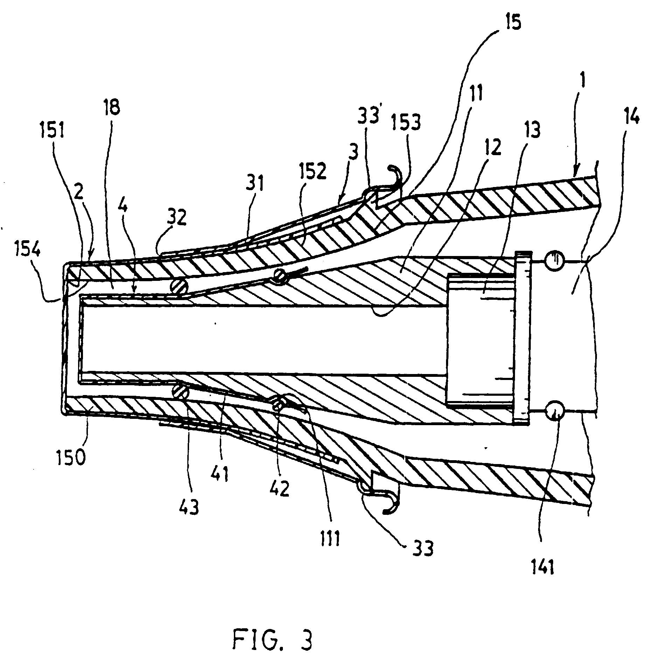

The infrared thermometer 1 includes: a probe 11 generally conical shaped and tapered forwardly within a front housing portion 15 formed on a front portion of the thermometer 1, a radiation guiding hole 12 longitudinally formed in the probe 11 for transmitting infrared radiation waves from an ear canal of a person to be measurd for his or her body temperature, a sensor 13 formed in a rear portion of the probe 11 for detecting the radiation waves for outputing electrical signal as converted from the radiation waves, a printed circuit board 14 secured on a plurality of stems 141 formed in the thermometer 1 and electrically connected with the sensor 13 for processing the electrical signal to be a readable digital temperature value which is shown on the LCD display window 17 formed on the thermometer 1, a trigger switch 16 for switching on the thermometer for temperature measurement, and an annular air gap 18 concentrically formed in the front housing portion 15 and defined between an inside wall 154 of the housing portion 15 and the probe 11 wrapped by the dust-proof means 4 as shown in Figure 3. The front housing portion 15 is also tapered forwardly from the thermometer 1 to dispose about the probe 11.

The disposable wrapping film 2 may be made of thin flexible transparent film capable of transmitting infrared radiation wave therethrough, such as made of poly-ethylene (PE) film, not limited in this invention.

The wrapping film 2 should have an area large enough to cover the front housing portion 15 of the thermometer.

The disposable wrapping film 2, after being disposed about the front housing portion 15, is fastened on the front housing portion 15 by the fastening cup member 3 generally formed as truncated cone shape and detachably securable on the front housing portion 15 of the thermometer 1.

The fastening cup member 3 includes: a truncated cone portion 31 slidably engageable with a rear enlarged portion 152 formed on a rear portion of the front housing portion 15 of the thermometer 1, a front cup opening 32 formed in a front end portion of the truncated cone portion 31 and positioned adjacent to a front taper portion 150 formed on a front end portion of the front housing portion 15 of the thermometer 1, and a rear groove 33 annularly formed in a rear end portion of the truncated cone portion 31 and engageable with a projection 153 generally triangular shaped formed on a rear portion of the front housing portion 15.

The disposable wrapping film 2 wrapped on the front housing portion 15 will seal a front opening 151 formed in a front end of the front housing portion 15 of the thermometer 1, and the wrapping film 2 will also cover the front housing 15 for preventing contamination into the probe of the thermometer by dirts in the ear canal.

The dust-proof means 4 includes: a dust-proof thin film 41 made of transparent and radiation transmissible film materials such as polyethylene film (but not limited in this invention) having an area large enough for sealing the radiation guiding hole 12 in the probe 11, a fastening ring 42 fastening the dust-proof thin film 41 on the probe 11 with the fastening ring 42 engageable with an annular recess 111 circumferentially formed in a rear portion of the probe 11 as packed by the thin film 41, and a circular contacting ring 43 circumferentially retained in between the inside wall 154 of the front housing portion 15 of the thermometer 1 and the thin film 41 wrapped on the probe 11 with the circular contacting ring 43 positioned in the annular air gap 15 in front of the fastening ring 42.

The circular contacting ring 43 will stabilize the probe 11 within the front housing portion 15 of the thermometer 1 since the contacting ring 43 is provided as a packing retained in between the inside wall of the front housing portion 15 and the probe 11.

The circular contacting ring 43 will limit the contacting area between the probe 11 and the housing portion 15 of the thermometer 1 to be a "point" contacting as shown in Figure 3 to minimize the heat transfer including thermal conduction between the housing portion 15 and the probe 11 as spaced by the air gap 18 which will well serve as a good heat insulative medium, thereby minimizing the influence with the ambient temperature outside the probe 11 and ensuring a reliable temperature measurement by sensing the radiation wave from the ear canal through the guiding hole 12 in the probe 11.

After conducting a temperature measurement by the thermometer 1 of the present invention, the fastening cup member 3 can be removed by disengaging the rear groove 33 in the cup member 3 from the projection 153 on the housing portion 15 and the disposable wrapping film will then be removed and disposed. The cup member 3 can be repeatedly used since the disposable film 2 is cheaper than the cup member 3. For family or personal use, the cup member 3 may not be disposed and can be repeatedly used for saving cost and minimizing waste.

The thin film 41 of the dust-proof means 4 will well seal the probe 11 for precluding dust entrance into the sensor 13 for ensuring a precise temperature measurement and prolonging the service life of the thermometer.

The infrared thermometer of the present invention may also be substituted with other electronic thermometers by using the same disposable wrapping film, the fastening cup member, and even the dust-proof thin film as disclosed in this invention.

The present invention is superior to the conventional electronic thermometer by providing a well protection probe of the thermometer and the disposable cover is now replaced with cheaper disposable film for saving cost and for solving problem of waste disposal for better environmental protection. Since only the front portion of the film may be contaminated by dirts in ear canal, the front portion of the cup member is already truncated and the truncated cup member, not contaminated, will be repeatedly used for saving cost.

The present invention may be modified without departing from the spirit and scope of this invention.

## Claims

1. A hygienic protecting means for an electronic thermometer including a probe formed in the front housing portion of the thermometer for sensing a body temperature through said probe defining an air gap between said probe and an inside wall in the front housing portion, the hygienic protecting means comprising:
a disposable wrapping film made of thin, flexible, transparent and radiation-wave transmissible film, disposed about the front housing portion of the thermometer;
a fastening cup member having a front portion thereof truncated, said cup member detachably securable on a rear portion of the front housing portion of the thermometer for fastening the disposable wrapping film on the front housing portion of said thermometer; and
a dust-proof means wrapping the probe portion within the front housing portion of the thermometer for preventing dust contamination into the probe;
whereby upon finishing a temperature measurement by said thermometer, said disposable wrapping film is removed and disposed, and said cup member is repeatedly used.

2. A hygienic protecting means according to Claim 1, wherein said fastening cup member includes:
a truncated cone portion slidably engeagable with a rear enlarged portion formed on a rear portion of the front housing portion of the thermometer, a front cup opening formed in a front end portion of the truncated cone portion and positioned adjacent to a front taper portion formed on a front end portion of the front housing portion of the thermometer, and a rear groove annularly formed in a rear end portion of the truncated cone portion and engageable with a projection formed on a rear portion of the front housing portion.

3. A hygienic protecting means according to Claim 1, wherein said disposable wrapping film wrapped on the front housing portion seals a front opening formed in a front end of the front housing portion of the thermometer and the wrapping film having an area for disposing the wrapping film on the front housing portion for preventing contamination into the probe of the thermometer.

4. A hygienic protecting means according to Claim 1, wherein said dust-proof means includes:
a dust-proof thin film made of transparent and radiation transmissible film having an area for sealing a radiation guiding hole formed in the probe, a fastening ring fastening the dust-proof thin film on the probe with the fastening ring engageable with an annular recess circumferentially formed in a rear portion of the probe as packed by the thin film, and a circular contacting ring circumferentially retained in between the inside wall of the front housing portion of the thermometer and the dust-proof thin film wrapped on the probe with the circular contacting ring positioned in the annular air gap in front of the fastening ring.

5. A hygienic protecting means according to Claim 4, wherein said circular contacting ring has a contacting area between the probe and the inside wall of the front housing portion of the thermometer to be a linear contacting to minimize the heat transfer between the front housing portion and the probe as spaced by the air gap defined between the probe and the inside wall of the front housing portion.
